**Europäisches Patentamt**

**European Patent Office**

**Office européen des brevets**

(11) Veröffentlichungsnummer : **0 316 297 B1**

# EUROPÄISCHE PATENTSCHRIFT

(45) Veröffentlichungstag der Patentschrift :
**15.01.92 Patentblatt 92/03**

(51) Int. Cl.$^5$ : **A61C 19/04**

(21) Anmeldenummer : **88890272.3**

(22) Anmeldetag : **02.11.88**

(54) **Paraocclusaler Löffel.**

(30) Priorität : **10.11.87 AT 2967/87**

(43) Veröffentlichungstag der Anmeldung :
**17.05.89 Patentblatt 89/20**

(45) Bekanntmachung des Hinweises auf die
Patenterteilung :
**15.01.92 Patentblatt 92/03**

(84) Benannte Vertragsstaaten :
**BE CH DE ES FR GB GR IT LI LU NL SE**

(56) Entgegenhaltungen :
**US-A- 2 832 137**
**US-A- 3 069 774**
**ZWR- Das Deutsche Zahnärzteblatt 8/1987, S.**
**702-704**

(73) Patentinhaber : **Mai, Martin, Dr.**
**Büttnergasse 1**
**A-1232 Wien (AT)**

(72) Erfinder : **Mai, Martin, Dr.**
**Büttnergasse 1**
**A-1232 Wien (AT)**

(74) Vertreter : **Pawloy, Heinrich, Dr. et al**
**Riemergasse 14**
**A-1010 Wien (AT)**

## Beschreibung

Die Erfindung bezieht sich auf einen paraocclusalen Löffel mit zwei am Unterkieferzahnbogen anzubringenden verstellbaren Haltebacken und einem mit diesen Haltebacken in Verbindung stehenden Basiskörper, der als Stab oder dgl. ausgebildet ist und zur übertragung der Unterkieferbewegung auf Anzeige- und/ oder Registriergeräte vorgesehen ist.

Ein derartizer Löffel ist ans der Zeitschrifs ZWR-Dar Dentche Zahnärzteblatt 8119875.702-704 bekannt.

Zur Erfassung von Schäden am Kiefergelenk bzw. zur Erfassung des Bewegungsverhaltens des Unterkiefers im Bezug auf das Oberkiefer beim normalen Kauen werden zur Abnahme des Bewegungsablaufs vom Unterkiefer häufig paraocclusale Löffel verwendet, also Geräte, die mit Haltebacken versehen sind, welche ihrerseits unter Verwendung einer Haft- bzw. Ausgleichsmasse an der Außenseite des Unterkieferzahnbogens befestigt werden ; die der Bewegung des Unterkiefers folgende Bewegung des Basiskörpers der paraocclusalen Löffel wird auf mechanischem oder elektronischem Wege erfaßt und angezeigt bzw. aufgezeichnet, wobei aus dem solcherart sichtbar gemachten Bewegungsverhalten des Unterkiefers z.B. auf Schäden im Kiefergelenk bzw. auf Fehlstellungen oder Fehlformen von Zähnen geschlossen werden kann. Durch das Anbringen der Haltebacken des Löffels an den Außenseiten des Unterkieferzahnbogens wird eine von diesem Löffel ausgehende Beeinflussung der in der Occlusionsebene bzw. Occlusionsfläche auftretenden Berührungen zwischen den Zähnen des Unterkiefers und den Zähnen des Oberkiefers weitestgehend hintangehalten und es können die vorzunehmenden Messungen bei einem wirklichkeitsnahen Sprechen oder Kauen durchgeführt werden.

Man hat bisher häufig paraocclusale Löffel analog wie Zahnprothesen als Einzelstücke angefertigt, welche der Form des Unterkieferzahnbogens des jeweiligen Patienten angepaßt waren und bei denen die Haltebacken mit dem Basiskörper zu einem einstückigen Gebilde vereint waren ; die Fertigung solcher paraocclusaler Löffel verursacht einen sehr großen Arbeitsaufwand, der nicht nur zu hohen Kosten führt sondern auch unerwünschte Wartezeiten bedingt.

Der eingangs genannte, ans dem Deutschen Zahnärzteblatt bekannte paraocclusale Löffel weist zwei sichel-förmige Haltebacken auf, die zu einem dem Unterkieferzahnbogen folgenden Bogen aneinandergefügt sind, wobei an den einander benachbarten Enden der beiden Haltebacken nach außen wegstehende Stutzen vorgesehen sind, welche über zwei parallel zueinander verlaufende Doppelgewindeschrauben miteinander verbunden sind, mit denen der Abstand und die gegenseitige Winkelstellung der beiden Stutzen und damit auch der Haltebacken einstellbar ist ; an einem der genannten Stutzen ist ein diesen Stutzen verlängernder Stab angebracht. Es ist dieser paraocclusale Löffel zwar durch Verstellen der beiden Doppelgewindeschrauben an verschiedene Formen und Größen des Unterkiefers anpaßbar, aber es erfordert die dazu nötige Manipulation an den beiden Doppelgewindeschrauben erhebliches Geschick, da diese beiden Schrauben in unmittelbarer Nähe der am Unterkieferzahnbogen liegenden Haltebacken angeordnet sind und da sich die Verstellungen der beiden Doppelgewindeschrauben gegenseitig beeinflussen. Außerdem läßt sich durch die vorgegebene Form der Haltebacken in vielen Fällen nur eine rohe Anpassung an die Form des Zahnbogens erzielen. Man nimmt deshalb häufig die Einstellung dieses bekannten paraocclusalen Löffels an einem Unterkiefermodell des betreffenden Patienten vor und bringt eine individuelle, durch Vorabdruck geformte Einlage an der Innenseite der Haltebacken an, wodurch sich trotz der Verstellbarkeit dieses bekannten Löffels ein großer Arbeitsaufwand bei seiner Verwendung ergibt.

Es ist ein Ziel der vorliegenden Erfindung, einen paraocclusalen Löffel zu schaffen, der bei einfachem Aufbau auf ein fache Weise verstellbar ist und bei einer großen Anzahl von Patienten verwendet werden kann, ohne daß die Notwendigkeit einer arbeitsaufwendigen Individualanpassung auftritt.

Der erfindungsgemäße paraocclusale Löffel eingangs erwähnter Art ist dadurch gekennzeichnet, daß die Haltebacken annähernd in ihrer Mitte schwenkbar mit Schwenkarmen verbunden sind, die ihrerseits schwenkbar am Basiskörper gelagert sind und von dieser Lagerstelle am Basiskörper weg sich voneinander entfernend zu den Verbindungstellen mit den Haltebacken verlaufen, und daß am Basiskörper eine feststellbare Verstelleinrichtung vorgesehen ist, die an den Schwenkarmen angreift und mit der die Lage der Schwenkarme zueinander einstellbar ist.

Durch diese Ausbildung kann der vorstehend erwähnten Zielsetzung sehr gut entsprochen werden. Durch die schwenkbare Verbindung der Haltebacken mit Schwenkarmen, die ihrerseits schwenkbar an einem Basiskörper gelagert sind, kann bei einer großen Vielfalt verschiedener Abmessungen und Formen des Unterkieferzahnbogens unter Zwischenfügung von Haft- bzw. Ausgleichsmassen ein guter Sitz der Haltebacken und damit des paraocclusalen Löffels am Unterkieferzahnbogen erzielt werden und es wird dadurch, daß eine feststellbare Verstelleinrichtung vorgesehen ist, die an den Schwenkarmen angreift und mit der die Lage der Schwenkarme zueinander einstellbar ist, das Anpassen des paraocclusalen Löffels an die Abmessungen und die Form des Unterkieferzahnbogens des jeweiligen Patienten sehr vereinfacht, weil durch das Vorhandensein der Schwenkarme die Verstelleinrichtung gut zugänglich angeordnet werden kann und weil durch die schwenkbare Verbindung der Haltebacken mit den Schwenkarmen ein selbsttätiges Ausrichten der Haltebacken auf die Außenform des Unterkieferzahnbogens möglich ist. Es ist so mit einfach und rasch durchführbarer Einstellmanipulation ein guter Sitz und Halt des paraocclusalen Löffels am Unterkieferzahnbogen erzielbar, der eine exakte und wirklichkeitskonforme Erfassung der von den für die Bewegung des Unterkiefers vorgesehenen Muskeln bewirkten Unterkieferbewegungen und von außen geführter Unterkieferbewegungen im statischen und dynamischen Bereich ermöglicht. So kann auf einfache Weise insbesondere Zustand und Funktion der Kiefergelenke untersucht und das allfällige Vorliegen von die Unterkieferbewegung bzw. die Funktion der Kiefergelenke durch ihre Form oder Stellung beeinträchtigenden Zähnen erfaßt werden.

Es ergibt sich dabei ein konstruktiv sehr einfacher Aufbau und auch eine einfache Bedienung der Verstelleinrichtung, wenn man vorsieht, daß die Verstelleinrichtung eine am oder im Basiskörper längsverschiebbar gelagerte Stange aufweist, die mit den Schwenkarmen zur Zwangssteuerung derselben gelenkig verbunden ist und bei ihrer Längsverschiebung die Schwenkarme verschwenkt. Hiebei ergibt sich eine sehr stabile Ausbildung der gelenkigen Verbindung der Stange mit den Schwenkarmen, wenn man das den Schwenkarmen zugewendete Ende der Stange über Lenker-Arme mit den Schwenkarmen verbindet. Man kann dabei auf konstruktiv einfache Weise eine leicht bedienbare und exakt arbeitende Einstellbarkeit erhalten, wenn man vorsieht, daß die Stange, vorzugsweise an ihrem den Schwenkarmen fernen Ende, ein Gewinde trägt, auf dem eine zur Einstellung der axialen Lage der Stange vorgesehene Mutter angeordnet ist.

Das Anordnen des Gewindes an dem den Schwenkarmen fernen Ende der Stange, welches ja in der Regel aus dem Mund hinausragt, läßt dabei eine weitere Vereinfachung der Bedienung des paraocclusalen Löffels erzielen. Es ergibt sich dabei weiter eine hinsichtlich des Aufbaues sehr einfache Lösung, wenn man vorsieht, daß der Basiskörper als Rohr ausgebildet ist und die Stange in diesem Rohr verschiebbar gelagert ist. Auf dieser Lösung aufbauend wird eine besonders vorteilhafte Ausführungsform erhalten, wenn man vorsieht, daß das den Schwenkarmen ferne Ende der Stange aus dem als Rohr ausgebildeten Basiskörper herausragt und auf dieses Ende die Mutter aufgeschraubt ist und diese beim axialen Einschieben der Stange in das Rohr einen am Rohrende zum Anliegen kommenden Anschlag bildet.

Hinsichtlich der zum Verstellen der Haltebacken von der Verstelleinrichtung auf die am Basiskörper schwenkbar gelagerten Schwenkarme zu übertragenden Verstellbewegungen bzw. Verstellkräfte ist es vorteilhaft, wenn man vorsieht, daß die Schwenkarme als zweiarmige Hebel ausgebildet sind, an deren einem Ende die Haltebacken schwenkbar gelagert sind und deren anderes Ende gelenkig mit der Verstelleinrichtung verbunden ist.

Um bei den für die durchzuführenden Untersuchungen notwendigerweise erforderlichen Unterkieferbewegungen bzw. Kauvorgängen einen möglichst beeinträchtigungsfreien normalen Lippenschluß bzw. eine weitgehend natürliche Lippenstellung zu ermöglichen, was für eine ungestörte Analyse der Unterkieferbewegungen große Bedeutung hat sieht man vorzugsweise vor, daß die Schwenkarme in Höhenrichtung bzw. in zur geometrischen Achse ihrer Schwenkbewegung paralleler Richtung gekröpft ausgebildet sind und so die Haltebacken bei in den Mund eingesetztem Löffel tiefer liegen als der aus dem Mund hinausragende Basiskörper. Es kann so der Basiskörper des paraocclusalen Löffels an jener Stelle aus dem Mund nach außen ragen, an der die Lippen beinatürlichem Lippenschluß aufeinanderliegen. Damit ist eine weitgehend ungestörte Analyse der beim Sprechen und Singen auftretenden Unterkieferbewegungen sowie der beim Kauen auftretenden Unterkieferbewegungen möglich, wobei in letzterem Fall das Schließen der Lippen ohne weiteres möglich ist.

Um vom Gewicht bzw. von der Masse des paraocclusalen Löffels her die Unterkieferbewegung, welche untersucht werden soll, möglichst wenig zu stören bzw. zu verändern, was gleichfalls für die Analyse der Unterkieferbewegungen beim Sprechen, Singen und Kauen von Bedeutung ist, ist es vorteilhaft, wenn man vorsieht, daß die Einzelteile des Löffels überwiegend aus einem hochfesten Leichtmetall, vorzugsweise Titan, bestehen. Diese Ausbildung ermöglicht es auch, die Einzelteile des Löffels auf verhältnismäßig einfache Weise herstellen zu können.

Die Erfindung wird nun unter Bezugnahme auf ein Beispiel, welches in der Zeichnung schematisch dargestellt ist, weiter erläutert.

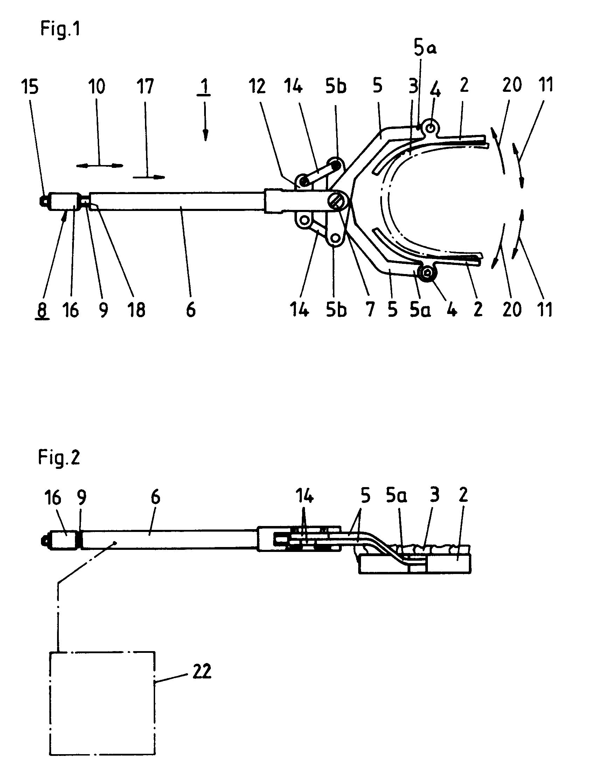

In der Zeichnung zeigt Fig. 1 einen erfindungsgemäß ausgebildeten paraocclusalen Löffel in einer Draufsicht und Fig. 2 diesen Löffel in einer Seitenansicht.

Bei dem in den Fig. 1 und 2 dargestellten Ausführungsbeispiel eines erfindungsgemäß ausgebildeten paraocclusalen Löffels 1, sind zwei Haltebacken 2 vorgesehen, welche dazu dienen, diesen Löffel am Unterkieferzahnbogen 3, der in Fig. 1 strichliert eingezeichnet ist, zu befestigen. Die Haltebacken 2 sind an annähernd in der Mitte dieser Haltebacken gelegenen Schwenkgelenken 4 mit Schwenkarmen 5 schwenkbar verbunden und es sind die Schwenkarme 5 ihrerseits schwenkbar am Basiskörper 6 des paraocclusalen Löffels gelagert. Die Lagerung der Schwenkarme 5, welche als zweiarmige Hebel ausgebildet sind, erfolgt dabei mit einer am Basiskörper 6 angeordneten Achse 7. Die Schwenkarme 5 verlaufen von der Lagerstelle am Basiskörper 6 weg sich voneinander entfernend zu den durch die Schwenkgelenke 4 gebildeten Verbindungstellen mit den Haltebacken 2. Die Schwenkgelenke 4, an denen die Haltebacken 2 schwenkbar mit den Schwenkarmen 5 in Verbindung stehen, befinden sich an einem Ende 5a der als zweiarmige Hebel ausgebildeten Schwenkarme 5 ; am anderen Ende 5b der Schwenkarme 5 sind diese Schwenkarme mit einer feststellbaren Verstelleinrichtung verbunden, mit der die Lage der Schwenkarme 5 zueinander und damit auch die Lage der Haltebacken 2 zueinander einstellbar ist. Die Verstelleinrichtung 8 weist eine im Basiskörper 6 verschiebbar gelagerte Stange 9 auf, die mit den Schwenkarmen 5 gelenkig verbunden ist ; diese Stange verschwenkt bei ihrer Längsverschiebung die Schwenkarme 5 im Sinne der Doppelpfeile 11. Hiezu ist das den Schwenkarmen zugewendete Ende 12 der Stange 9 über Lenkerarme 14, die an den Enden 5b der Schwenkarme 5 angreifen, mit den Schwenkarmen 5 verbunden. Der Basiskörper 6 ist als Rohr ausgebildet, in dem die Stange 9 verschiebbar gelagert und gut geschützt untergebracht ist. An dem den Schwenkarmen 5 fernen Ende trägt die Stange 9 ein Gewinde 15, auf dem eine zur Einstellung der axialen Lage der Stange 9 vorgesehene Mutter 16 angeordnet ist. Beim axialen Einschieben der Stange 9 in den als Rohr ausgebildeten Basiskörper 6 im Sinne des Pfeiles 17 bildet die Mutter 16 einen am Rohrende 18 zum Anliegen kommenden Anschlag.

Beim Einschieben der Stange 9 in das Rohr 6 im Sinne des Pfeiles 17 entfernen sich die Haltebacken 2 voneinander, wobei sie im Sinne der Pfeile 20 durch die Schwenkarme 5 nach außen geschwenkt werden. Durch entsprechendes Verstellen der Mutter 16 kann dabei das Einschieben der Stange 9 in den als Rohr ausgebildeten Basiskörper 6 begrenzt werden und damit auch das Ausmaß des Voneinanderwegschwenkens der Haltebacken, so daß die Gesamtbreite dieses Löffels, welche ja für das Einführen in den Mund von Bedeutung ist, entsprechend beschränkt bleibt. Durch nachfolgendes Drehen der Mutter 16 im Sinne eines Herausziehens des Endes der Stange 9 in der dem Pfeil 17 entgegengesetzten Richtung aus dem als Rohr ausgebildeten Basiskörper 6, können die Haltebacken 2 aufeinander zu bewegt und von der Seite her am Unterkieferzahnbogen zum Anliegen gebracht werden, wobei man zweckmäßig zwischen die Haltebacken 2 und den Unterkieferzahnbogen 3 eine Haft- bzw. Ausgleichsmasse einfügt.

Sobald der paraocclusale Löffel 1 am Unterkieferzahnbogen 3 befestigt ist, wobei der in Form eines Rohres ausgebildete Basiskörper 6 aus dem Mund ragt, kann durch entsprechendes Verbinden des Basiskörpers 6 mit einem Aufzeichnungs- oder Abbildungsgerät 22 die Bewegung des Unterkiefers sichtbar gemacht bzw. dokumentiert werden.

Soll der paraocclusale Löffel wieder vom Unterkieferzahnbogen gelöst werden, braucht hiezu nur die Mutter 16 am Gewinde 15 soweit vom Ende 18 des Rohres 6 entfernt werden, daß wieder ein Einschieben der Stange 9 in das Rohr 6 im Sinne des Pfeiles 17 erfolgen kann, wodurch die Haltebacken 2 wieder voneinander entfernt und dabei vom Unterkieferzahnbogen 3 gelöst werden.

Die Schwenkarme 5 sind, wie aus Fig. 2 ersichtlich ist, in Höhenrichtung, d.h. in zur geometrischen Achse ihrer Schwenkbewegung paraller Richtung gekröpft ausgebildet und es liegen so die Haltebacken 2 bei in den Mund eingesetztem Löffel tiefer als der aus dem Mund hinausragende Basiskörper 6. Es ist damit möglich, bei in den Mund eingesetztem, paraocclusalem Löffel die Lippen auch bei einem Bewegen des Unterkiefers, wie es z.B. beim Kauvorgang abläuft, normal geschlossen zu halten, und trotzdem einen von den Lippen her weitgehend unbeeinflußten Ablauf der Bewegung des Unterkiefers sicherzustellen.

Die Einzelteile des Löffels 1 bestehen vorzugsweise überwiegend aus einem hochfesten Leichtmetall, insbesondere Titan, weil durch ein geringes Gewicht des paraocclusalen Löffels sichergestellt werden kann, daß von diesem Löffel her keine wesentlichen Veränderungen der Kieferbewegung verursacht werden und weil weiter aus einem solchen Metall die Einzelteile des Löffels weitgehend problemlos gefertigt werden können.

## Patentansprüche

1. Paraocclusaler Löffel mit zwei am Unterkieferzahnbogen seitlich anzubringenden verstellbaren Haltebacken (2) und einem mit diesen Haltebacken in Verbindung stehenden Basiskörper (6), der als Stab oder dgl. ausgebildet ist und zur übertragung der Unterkieferbewegung auf Anzeige- und/oder Registriergeräte (22) vorgesehen ist, dadurch gekennzeichnet, daß die Haltebacken (2) annähernd in ihrer Mitte schwenkbar mit Schwenkarmen (5) verbunden sind, die ihrerseits schwenkbar am Basiskörper (6) gelagert sind und von dieser Lagerstelle am Basiskörper weg sich voneinander entfernend zu den Verbindungsstellen mit den Haltebacken (2) verlaufen, und daß am Basiskörper (6) eine feststellbare Verstelleinrichtung (8) vorgesehen ist, die an den Schwenkarmen (5) angreift und mit der die Lage der Schwenkarme zueinander einstellbar ist.

2. Paraocclusaler Löffel nach Anspruch 1, dadurch gekennzeichnet, daß die Verstelleinrichtung (8) eine am oder im Basiskörper (6) längsverschiebbar gelagerte Stange (9) aufweist, die mit den Schwenkarmen (5) zur Zwangssteuerung derselben gelenkig verbunden ist und bei ihrer Längsverschiebung die Schwenkarme (5) verschwenkt.

3. Paraocclusaler Löffel nach Anspruch 2, dadurch gekennzeichnet, daß das den Schwenkarmen (5) zugewendete Ende (12) der Stange (9) über Lenker-Arme (14) mit den Schwenkarmen (5) verbunden ist.

4. Paraocclusaler Löffel nach Anspruch 2 oder 3, dadurch gekennzeichnet, daß die Stange (9), vorzugsweise an ihrem den Schwenkarmen fernen Ende, ein Gewinde (15) trägt, auf dem eine zur Einstellung der axialen Lage der Stange (9) vorgesehene Mutter (16) angeordnet ist.

5. Paraocclusaler Löffel nach einem der Ansprüche 2 bis 4, dadurch gekennzeichnet, daß der Basiskörper (6) als Rohr ausgebildet ist und die Stange (9) in diesem Rohr verschiebbar gelagert ist.

6. Paraocclusaler Löffel nach den Ansprüchen 4 und 5, dadurch gekennzeichnet, daß das den Schwenkarmen (5) ferne Ende der Stange (9) aus dem als Rohr ausgebildeten Basiskörper (6) herausragt und auf dieses Ende die Mutter (16) aufgeschraubt ist und diese beim axialen Einschieben der Stange in das Rohr einen am Rohrende (18) zum Anliegen kommenden Anschlag bildet.

7. Paraocclusaler Löffel nach einem der Ansprüche 1 bis 6, dadurch gekennzeichnet, daß die Schwenkarme (5) als zweiarmige Hebel ausgebildet sind, an deren einem Ende (5a) die Haltebacken (2) schwenkbar gelagert sind und deren anderes Ende (2b) gelenkig mit der Verstelleinrichtung (8) verbunden ist.

8. Paraocclusaler Löffel nach einem der Ansprüche 1 bis 7, dadurch gekennzeichnet, daß die Schwenkarme (5) in Höhenrichtung bzw. in zur geometrischen Achse ihrer Schwenkbewegung paralleler Richtung gekröpft ausgebildet sind und so die Haltebacken (2) bei in den Mund eingesetztem Löffel tiefer liegen als der aus dem Mund hinaus ragende Basiskörper (6).

9. Paraocclusaler Löffel nach einem der Ansprüche 1 bis 8, dadurch gekennzeichnet, daß die Einzelteile des Löffels überwiegend aus einem hochfesten Leichtmetall, vorzugsweise Titan, bestehen.

**Claims**

1. A paraocclusive instrument comprising two adjustable holding jaws (2) laterally applicable to the lower dental arch and a basic element (6) being realized as a rod or similar element and being in communication with said holding jaws to transfer movement of the mandible to display- and/or recording-devices (22), wherein said holding jaws (2) being pivotally connected at a central region thereof to pivot arms (5), said pivot arms also being pivotally mounted to said basic element (6) and extending divergingly from their bearing at the basic element to the connection with said holding jaws (2), and lockable adjustment means (8) are provided at said basic element (6) engaging said pivot arms (5) and serving to adjust the mutual position of the pivot arms.

2. A paraocclusive instrument as defined in claim 1, wherein the adjustment means (8) includes a rod (9) mounted at or in the basic element (6) and longitudinally displaceable relative to said basic element, said adjustment means connected to the pivot arms (5) in an articulated manner so as to positively control said pivot arms, said adjustment means, when longitudinally displaced, pivoting said pivot arms (5).

3. A paraocclusive instrument as defined in claim 2, wherein the end (12) of the rod (9) at said pivot arms is connected with the pivot arms (5) by guide arms (14).

4. A paraocclusive instrument as defined in claim 2 or 3, wherein said rod (9) has a thread (15), preferably arranged at the end of said rod (9) remote from said pivot arms (5), and a nut (16) threadedly engaging said thread (15) for setting the axial position of said rod (9).

5. A paraocclusive instrument as defined in anyone of claims 2 to 4, wherein said basic element (6) is configured as a tube and said rod (9) is shiftable in said tube.

6. A paraocclusive instrument as defined in claims 4 and 5, wherein the end of said rod (9) remote from said pivot arms (5) projects from said tubular basic element (6) and said nut (16) is threaded onto said end whereby, if the rod is pushed axially into the tube, said nut forms a stop which is disposed at the end (18) of the tube.

7. A paraocclusive instrument as defined in anyone of claims 1 to 6, wherein said pivot arms (5) are configured as dual-arm levers, said holding jaws (2) being pivotally mounted at one end (5a) thereof, the other ends (5b) thereof being articulatedly connected with said adjustment means (8).

8. A paraocclusive instrument as defined in anyone of claims 1 to 7, wherein said pivot arms (5) are cranked in vertical direction resp. in the direction parallel to the geometric axis of their pivoting movement, whereby, if the instrument is inserted into the mouth, the holding jaws (2) lie lower than the basic element (6) which projects from the mouth.

9. A paraocclusive instrument as defined in anyone of claims 1 to 8, wherein the individual components of said instrument are made of titanium.

**Revendications**

1. Pince paraocclusale comprenant deux mors réglables de retenue (2) destinés à être déplacés latéralement contre l'arc de la denture de la mâchoire inférieure, ainsi qu'un corps de base (6) qui est en liaison avec ces mors de retenue et qui est conformé en barre ou analogue et prévu pour transmettre les mouvements de la mâchoire inférieure à des appareils (22) d'affichage et/ou d'enregistrement, caractérisée en ce que les mors de retenue (2) sont reliés, de manière à pouvoir pivoter, approximativement en leur milieu à des bras oscillants (5) qui, de leur côté, sont montés de manière à pouvoir pivoter sur le corps de base (6) et qui sont configurés de manière à s'écarter l'un de l'autre à partir de ce lieu de montage sur le corps de base pour aboutir aux points de liaison avec les mors de retenue (2), et en ce qu'un dispositif immobilisable de positionnement (8), qui est prévu sur le corps de base (6), attaque les bras oscillants (5) et permet de régler la position des bras oscillants l'un par rapport à l'autre.

2. Pince paraocclusale selon la revendication 1, caractérisée en ce le dispositif de positionnement (8) comprend une tige (9) montée coulissante longitudinalement sur ou dans le corps de base (6), reliée par articulation aux bras oscillants (5) pour la commande dynamique de ces derniers et qui, lors de son coulissement longitudinal, fait pivoter les bras oscillants (5).

3. Pince paraocclusale selon la revendication 2, caractérisée en ce que l'extrémité (12) de la tige (9) qui est tournée vers les bras oscillants (5) est reliée à ces derniers par des biellettes (14).

4. Pince paraocclusale selon la revendication 2 ou 3, caractérisée en ce que la tige (9) comporte un filetage (15) situé de préférence à son extrémité éloignée des bras oscillants et sur lequel est disposé un écrou (16) prévu pour le réglage de la position axiale de la tige (9).

5. Pince paraocclusale selon l'une des revendications 2 à 4, caractérisée en ce que le corps de base (6) est conformé en tube et la tige (9) est montée coulissante dans ce tube.

6. Pince paraocclusale selon les revendications 4 et 5, caractérisée en ce que l'extrémité de la tige (9) qui est éloignée des bras oscillants (5) ressort du corps de base (6) conformé en tube et l'écrou (16) vissé sur cette extrémité forme une butée entrant en application contre l'extrémité (18) du tube lors du mouvement de pénétration par coulissement axial de la tige dans le tube.

7. Pince paraocclusale selon l'une des revendications 1 à 6, caractérisée en ce que les bras oscillants (5) sont conformés en leviers doubles sur l'une (5a) des extrémités desquels les mors de retenue (2) sont montés pivotants et dont l'autre extrémité (2b) est reliée par articulation au dispositif de positionnement (8).

8. Pince paraocclusale selon l'une des revendications 1 à 7, caractérisée en ce que les bras oscillants (5) sont coudés en hauteur et en direction parallèle à l'axe géométrique de leur mouvement de pivotement et ainsi, lorsque la pince est mise en place dans la bouche, les mors de retenue (2) sont plus bas que le corps de base (6) qui ressort de la bouche.

9. Pince paraocclusale selon l'une des revendications 1 à 8, caractérisée en ce que les pièces individuelles de la pince sont en majeure partie en un métal léger à grande résistance, de préférence en titane.

Fig.1

Fig.2